# EUROPÄISCHE PATENTSCHRIFT

(11) **EP 1 982 575 B1**
(45) Veröffentlichungstag und Bekanntmachung des Hinweises auf die Patenterteilung: **09.06.2010**
(21) Anmeldenummer: 08003409.3
(22) Anmeldetag: 25.02.2008
(51) Int. Cl.: A01F 15/10, A01F 15/07

(54) **Kontinuierlich arbeitende Ballenpresse**
Continuously operating baler
Presse à empaqueter fonctionnant en continu

(30) Priorität: 18.04.2007 DE 102007018329
(43) Veröffentlichungstag der Anmeldung: 22.10.2008
(73) Patentinhaber: Alois Pöttinger Maschinenfabrik Ges. m.b.H., 4710 Grieskirchen (AT)
(72) Erfinder: Aumayr, Klaus, Dipl.-Ing., 4612 Scharten (AT); Ratzberger, Daniel, Mag., 4441 Behamberg (AT); Menzl, Herbert, Ing., 4600 Wels (AT)
(74) Vertreter: Thoma, Michael

(56) Entgegenhaltungen:
- EP-A- 0 350 514
- DE-A1- 2 634 638
- DE-A1- 10 006 384
- DE-A1- 19 932 336

## Beschreibung

Die vorliegende Erfindung betrifft eine kontinuierlich arbeitende Ballenpresse für landwirtschaftliches Erntegut, mit einem Laderaum, einer Aufsammelvorrichtung zum Aufsammeln von auf dem Boden liegenden Erntegut, einem Laderaum-Befüllförderer zur Beförderung des aufgesammelten Ernteguts in den Laderaum sowie einem Laderaum-Bodenförderer zur Beförderung des Ernteguts im Laderaum weg von dem Befüllförderer, sowie mit einer Ballenpressvorrichtung, die in dem Laderaum des Ladewagens angeordnet ist und einen am Einlass ihres Pressraums angeordneten Pressraum-Beschickungsförderer aufweist, dem durch den Laderaum-Bodenförderer Erntegut zuführbar ist.

Eine kontinuierlich arbeitende Ballenpresse zeigt die DE 199 32 336 A1. Im Gegensatz zu herkömmlichen, nicht kontinuierlich arbeitenden Ballenpressen, die bei Fertigstellung eines Ballens einschließlich dessen Einwicklung und dessen Abwurfs stehen bleiben müssen, da aufgenommenes Erntegut durch das Öffnen des Pressraums nicht verarbeitet werden könnte, ist es bei solchen kontinuierlich arbeitenden Ballenpressen möglich, auch bei Fertigstellung eines Ballens weiterzufahren, wobei auch hier während dieser Zeitspanne dem Pressraum der Ballenpressvorrichtung kein Erntegut zugeführt wird. Wie in der vorgenannten DE 199 32 336 A1 gezeigt, bildet der zwischen der Aufsammelvorrichtung und der Ballenpressvorrichtung vorgesehene Laderaum einen Erntegutpuffer, in den das beim Weiterfahren während der Ballenfertigstellung aufgenommene Erntegut zwischenzeitlich gefördert wird. Problematisch ist bei derartigen kontinuierlich arbeitenden Ballenpressen jedoch der Abbau des in dem als Puffer dienenden Laderaums aufgestauten Ernteguts. Wird während der Fertigstellung eines Ballens einschließlich dessen Verpackung und Abwurfs zur Erreichung einer hohen Flächenleistung mit unverminderter Geschwindigkeit weitergefahren, kann sich in dem Laderaum zwischen Aufsammelvorrichtung und Ballenpressvorrichtung ein zum Teil beträchtlicher Erntegutberg aufbauen, der bei begrenzter Pressenleistung nicht ohne weiteres wieder abgebaut werden kann, ohne die Fahrgeschwindigkeit zu vermindern.

Um einen störungsfreien Pressenbetrieb mit möglichst hoher Volumenleistung zu erreichen, sollte ungeachtet des sich im Laderaum aufbauenden Erntegutberges der Ballenpressvorrichtung ein möglichst gleichmäßiger, kontinuierlicher Erntegutstrom zugeführt werden. Die DE 199 32 336 A1 sieht hierzu einerseits einen am Boden des Laderaums vor dem Einlass des Pressraums angeordneten Bandförderer sowie andererseits einen unmittelbar am Einlass des Pressraums angeordneten Förderrotor vor. Um Ungleichmäßigkeiten im Erntegutstrom ausgleichen zu können, soll der besagte Bandförderer an seinem dem Pressraum zugewandten Ende absenkbar sein. Dies kann jedoch letztlich Verstopfungen am Einlass des Pressraums nicht vermeiden, wenn mit nahezu unverminderter Geschwindigkeit auch dann weitergefahren wird, wenn die Ballenpressvorrichtung nicht mit Erntegut beschickbar ist. Letztlich muss deshalb bei diesem Gerät die Fahrgeschwindigkeit deutlich reduziert werden, wenn die Ballenpressvorrichtung gerade dabei ist, einen Ballen fertig zu stellen, und deshalb nicht für weiteres Erntegut aufnahmefähig ist. Ein weiterer Nachteil dieser vorbekannten Vorrichtung ergibt sich aus der Ausbildung ihres Fahrwerks, welches durch die Anordnung seiner Räder bei nicht in Schwaden auf dem Boden liegendem Erntegut das erst bei der nächsten Bahn aufzunehmende Erntegut randseitig niederdrückt, wodurch es beim Aufnahmen der nächsten Bahn zu einem unregelmäßigen Erntegutstrom kommt, der die vorgenannte Problematik von Verstopfungen am Einlass des Pressraums verschärft und zu einer weiteren Begrenzung der Flächenleistung des Geräts führt.

Hiervon ausgehend liegt der vorliegenden Erfindung die Aufgabe zugrunde, eine verbesserte kontinuierlich arbeitende Ballenpresse zu schaffen, die Nachteile des Standes der Technik vermeidet und letzteren in vorteilhafter Weise weiterbildet. Vorzugsweise soll die Auslastung der Ballenpressvorrichtung durch Ausmerzung von Beschickungsproblemen verbessert und dadurch die Flächenleistung der Ballenpresse weiter erhöht werden.

Erfindungsgemäß wird diese Aufgabe durch eine kontinuierlich arbeitende Ballenpresse gemäß Anspruch 1 gelöst. Bevorzugte Ausgestaltungen der Erfindung sind Gegenstand der abhängigen Ansprüche.

Die vorliegende Erfindung geht von der Überlegung aus, dass der vor der Ballenpressvorrichtung liegende Laderaum stärker ausgenutzt und auch das Auftürmen größerer Erntegutmengen in diesem Laderaum zugelassen wird, um eine möglichst starke Pufferung zu erreichen und dadurch ein Durchfahren mit möglichst unverminderter Geschwindigkeit auch dann zu ermöglichen, wenn die Ballenpresse insbesondere bei Fertigstellung und Abladung eines Ballens nicht aufnahmebereit ist. Um trotz höherer Erntegutmengen im Laderaum Verstopfungsprobleme bei der Ballenpressvorrichtung zu verhindern, wird eine zusätzliche Vergleichmäßigung des Erntegutstroms beim Abbau eines im als Puffer dienenden Laderaum aufgehäuften Erntegutbergs über den Laderaum-Bodenförderer hinaus vorgesehen. Erfindungsgemäß ist in dem Laderaum des Ladewagens oberhalb des Laderaum-Bodenförderers zwischen dem Laderaum-Befüllförderer und dem Pressraum-Beschickungsförderer ein Dosierförderer zur Dosierung der dem Pressraum zugeführten Erntegutmenge vorgesehen. Dieser zusätzliche Dosierförderer oberhalb des Laderaumbodenförderers ermöglicht gerade bei großen im Laderaum aufgehäuften Erntegutmengen einerseits einen raschen Abbau dieses Erntegutberges und andererseits dennoch eine gleichmäßige Beschickung des Pressraums der Ballenpressvorrichtung ohne die Gefahr von Verstopfungen.

Auch wenn der Dosierförderer grundsätzlich verschieden ausgebildet sein kann, umfasst der Dosierförderer in vorteilhafter Weiterbildung der Erfindung mindestens einen rotatorisch antreibbaren Förderrotor, wobei zur Steigerung der Effizienz und der Genauigkeit der Dosierung vorteilhafterweise mindestens ein Paar Förderrotoren vorgesehen sind, die gegenläufig antreibbarer sein können oder alternativ auch gleichsinnig angetrieben werden können. Diese Förderrotoren erstrecken sich vorteilhafterweise deutlich oberhalb des Laderaumbodens, so dass sie vor der Ballenpressvorrichtung sozusagen eine Erntegutbarriere bilden, die bei Abschaltung oder nur langsamem Betrieb der Förderrotoren ein hohes Anhäufen von Erntegut im Laderaum ermöglichen und andererseits ein dosiertes Abfördern und Zufördern zu dem Pressraum auch bei großen gespeicherten Erntegutmengen ermöglichen. Grundsätzlich könnten diese Förderrotoren aufrecht angeordnet sein, so wie dies von Miststreuern bekannt ist. Vorzugsweise jedoch sind die Förderrotoren liegend angeordnet, wobei sie sich vorteilhafterweise quer über den gesamten Laderaum hinweg erstrecken und beispielsweise an den Seitenwänden des Laderaums angelenkt sein können.

Zwischen einer Unterkante bzw. Unterseite des Dosierförderers und dem Laderaum-Bodenförderer ist hierbei vorteilhafterweise ein ausreichender Abstand vorgesehen, so dass ein auf dem Laderaumboden laufender Erntegutteppich eingriffsfrei an den Dosierförderern vorbei zur Ballenpressvorrichtung gefördert werden kann. Dies erlaubt es im Normalbetrieb, wenn kein Erntegutberg im Laderaum angehäuft ist, auch ohne Zutun bzw. bei stillstehenden Förderrotoren des Dosierförderers die Ballenpressvorrichtung mit Erntegut zu beschicken, das durch den Laderaum-Bodenförderer zu dem Pressraum befördert werden kann. Durch diesen Abstand der unteren Förderwalze des Dosierförderers vom Laderaumboden kann sozusagen eine Grundbeschickung der Ballenpressvorrichtung erreicht werden.

In Weiterbildung der Erfindung ist der Dosierförderer hinsichtlich seiner Fördermenge variabel einstellbar ausgebildet, und zwar vorteilhafterweise unabhängig von der Fördergeschwindigkeit bzw. der Fördermenge der anderen Förderer des Ladewagens bzw. der Ballenpressvorrichtung. Hierdurch kann der Dosierförderer beispielsweise vorübergehend eine größere Fördermenge nach Auflaufen eines höheren Erntegutberges im Laderaum abfördern, ohne dass der Pressraum-Beschickungsförderer oder der Laderaum-Hüllförderer gleichfalls schneller laufen müsste. Selbstverständlich ist es vorteilhafterweise dabei auch möglich, den Dosierförderer zusammen mit den genannten anderen Förderern in seiner Fördermenge zu verstellen.

Die Einstellung der Fördermenge des Dosierförderers kann dabei grundsätzlich auf verschiedene Art und Weise erfolgen. Nach einer bevorzugten Ausführung der Erfindung kann der Dosierförderer eine Einstellvorrichtung zur Veränderung des Abstandes der Förderrotoren voneinander aufweisen. So kann beispielsweise der Abstand der Förderrotoren verkleinert und damit der Durchgang zwischen den beiden Förderrotoren verkleinert werden, um eine geringere Menge zu fördern, bzw. umgekehrt vergrößert werden, um eine größere Fördermenge zu fördern. Auch ist es möglich, mittels der Einstellvorrichtung die Höhe der Förderrotoren über dem Laderaumboden und hierdurch den unter dem Dosierförderer hindurch laufenden Erntegutteppich zu verändern.

Alternativ oder zusätzlich kann der Dosierförderer Einstellmittel zur Veränderung der Drehgeschwindigkeit der Förderrotoren besitzen, um hierdurch entsprechend die Fördermenge bzw. -leistung zu verändern.

Vorteilhafterweise ist hierbei eine Steuereinrichtung vorgesehen, die die Fördermenge bzw. -leistung des Dosierförderers in Abhängigkeit diverser Betriebsparameter automatisch steuert. Insbesondere kann die Steuereinrichtung hierbei den Belastungs- und/oder Füllzustand der Ballenpressvorrichtung berücksichtigen, insbesondere die Fördermenge des Dosierförderers erhöhen, solange die Ballenpressvorrichtung hinsichtlich ihres Belastungszustandes unter ihrer Maximalbelastung bleibt bzw. kann die Fördermenge des Dosierförderers begrenzt bzw. abgesenkt werden, wenn die Ballenpressvorrichtung ihre Leistungsgrenze erreicht. Vorteilhafterweise wird hierbei die Fördermenge des Dosierförderers in Abhängigkeit des Belastungs- bzw. Füllzustandes der Ballenpressvorrichtung derart geregelt, dass die Ballenpressvorrichtung in einem gewünschten, insbesondere maximalen Leistungsbereich fährt. In Weiterbildung der Erfindung kann die Fördermenge des Dosierförderers dabei nicht nur den Belastungszustand der Ballenpressvorrichtung, sondern auch deren grundsätzlichen Betriebszustand berücksichtigen, insbesondere kann dann die Fördermenge des Dosierförderers heruntergefahren werden, wenn die Ballenpressvorrichtung dabei ist, einen Ballen fertig zu stellen und auszugeben.

Der Belastungszustand der Ballenpressvorrichtung kann hierbei grundsätzlich in verschiedener Weise erfasst werden, beispielsweise durch Erfassung des Belastungszustandes der den Pressraum begrenzenden Presswalzen. In Weiterbildung der Erfindung kann der Belastungszustand auch über das am Pressraum-Beschickungsförderer vorliegende Drehmoment bzw. dessen Belastungszustand erfasst werden. Die Steuereinrichtung ist hierzu mit einem geeigneten Sensor bzw. einer geeigneten Erfassungsvorrichtung verbunden, die den Betriebs-, Belastungs- und/oder Füllzustand der Ballenpressvorrichtung bestimmt.

Die Fördermenge des Dosierförderers kann weiterhin in vorteilhafter Weiterbildung der Erfindung alternativ oder zusätzlich auch in Abhängigkeit des Laderaum-Befüllzustandes und/oder eines Belastungszustandes des Laderaum-Befüllförderers gesteuert werden. Baut sich beispielsweise am Laderaumbefüllförderer ein zu großer Rückstaudruck auf, kann der Dosierförderer hinsichtlich seiner Fördermenge bzw. -geschwindigkeit nach oben gefahren werden, um diesen Rückstaudruck zu verringern, wobei vorzugsweise dies im Rahmen der der Ballenpressvorrichtung maximal zuführbaren Erntegutmenge erfolgt.

In Weiterbildung der Erfindung ist nicht nur der Dosierförderer hinsichtlich seiner Fördermenge bzw. Förderleistung variabel steuerbar. Alternativ oder zusätzlich hierzu kann in Weiterbildung der Erfindung die Fördergeschwindigkeit des Laderaum-Bodenförderers durch eine entsprechende Steuereinrichtung in Abhängigkeit eines Belastungs- und/oder Füllzustands der Ballenpressvorrichtung verändert werden. Vorteilhafterweise erfolgt auch hier eine Regelung der Fördergeschwindigkeit des Laderaum-Bodenförderers dahingehend, dass die Ballenpressvorrichtung in einem gewünschten, insbesondere in einem möglichst hohen Leistungsbereich arbeitet und der Ballenpressvorrichtung die entsprechende Erntegutmenge zugeführt wird.

Alternativ oder zusätzlich kann die Steuereinrichtung die Fördergeschwindigkeit bzw. -leistung des Laderaum-Bodenförderers und/oder des Dosierförderers und/oder des Pressraum-Beschickungsförderers und/oder des Laderaum-Befüllförderers in Abhängigkeit der Fahrgeschwindigkeit variieren. Hinsichtlich der Fördergeschwindigkeit des Laderaum-Bodenförderers und/oder des Dosierförderers wird dabei insbesondere auch der Belastungszustand des Laderaum-Beschickungsförderers und/oder der Füllzustand des Laderaums berücksichtigt, wobei diese Parameter durch geeignete Erfassungseinrichtungen vorzugsweise in Form von Sensoren bestimmt werden können, wobei beispielsweise die Leistungsaufnahme und/oder das Drehmoment des Laderaum-Befüllförderers erfasst werden kann.

Um eine möglichst optimale Auslastung der Ballenpresse und damit eine höchstmögliche Flächenleistung, insbesondere der Ballenpressvorrichtung, zu erreichen, kann in Weiterbildung der Erfindung die Steuereinrichtung ein Fahrgeschwindigkeits-Sollwertsignal vorgeben, anhand dessen beispielsweise bei Anzeige dieses Fahrgeschwindigkeits-Sollwertsignals der Fahrer entsprechend eingreifen kann oder vorzugsweise die Fahrgeschwindigkeit automatisch gesteuert werden kann. Dieses Fahrgeschwindigkeits-Sollwertsignal wird dabei vorteilhafterweise in Abhängigkeit des Belastungs-, Betriebs- und/oder Füllzustands der Ballenpressvorrichtung von der Steuereinrichtung bestimmt, wobei die Steuereinrichtung auch noch weitere Parameter, wie beispielsweise den Füllzustand des Laderaums und/oder die Belastung des Laderaumbefüllförderers, berücksichtigen kann.

In Weiterbildung der Erfindung kann dabei vorteilhafterweise eine Überwachung des Belastungszustandes der Ballenpressvorrichtung erfolgen und das Fahrgeschwindigkeits-Sollwertsignal solange erhöht werden, bis eine maximale Auslastung der Ballenpressvorrichtung erreicht wird. Hierbei kann gleichzeitig eine Begrenzung des Fahrgeschwindigkeits-Sollwertsignals in Abhängigkeit weiterer Betriebsparameter vorgesehen sein, insbesondere in Abhängigkeit des Belastungszustandes der Aufsammeleinrichtung, des Laderaum-Befüllförderers, des Laderaum-Befüllzustandes und/oder des Belastungszustandes des Dosierförderers und/oder des Laderaum-Bodenförderers. Hierbei ist die Steuerung vorteilhafterweise derart ausgebildet, dass immer dann eine Begrenzung des Fahrgeschwindigkeits-Sollwertsignals vorgenommen wird, wenn eine dieser Gerätekomponenten an ihre Leistungsgrenzen kommt.

Um eine möglichst gleichmäßige Beschickung der Ballenpressvorrichtung mit Erntegut zu erreichen, ist in Weiterbildung der Erfindung der Laderaum-Bodenförderer vorteilhafterweise als Kratzbodenförderer ausgebildet. Alternativ zu einem solchen Kratzboden könnte der Laderaum-Bodenförderer auch ein Bandförderer sein. Das Vorsehen eines Kratzbodenförderers kann jedoch hinsichtlich Robustheit und Standfestigkeit Vorteile haben.

Um ein einfaches Entleeren des Laderaums des Ladewagens zu ermöglichen, ist in Weiterbildung der Erfindung der Laderaumboden zusammen mit dem Laderaum-Bodenförderer an einem der Ballenpressvorrichtung abgewandten Ende, insbesondere also an einem vorderen Ende, absenkbar ausgebildet, wobei der Laderaum-Bodenförderer vorteilhafterweise in seiner Förderrichtung umkehrbar ausgebildet ist, so dass bei abgesenktem Laderaumboden der Laderaum von der Ballenpressvorrichtung weg entladen werden kann.

Um eine gleichmäßigere Beschickung der Ballenpressvorrichtung mit Erntegut zu ermöglichen, ist in Weiterbildung der Erfindung dem Laderaum-Befüllförderer ein Schneidwerk zugeordnet, so dass das Erntegut bereits beim Eintritt in den Laderaum entsprechend zerkleinert werden kann, wodurch sich das Erntegut im Laderaum besser verteilt und gleichmäßiger der Ballenpressvorrichtung zugeführt werden kann. Insbesondere kann hierdurch an der Ballenpressvorrichtung selbst auf ein Schneidwerk verzichtet werden bzw. nur ein kleineres Hilfsschneidwerk mit geringerer Schneidleistung und entsprechend weiteren Messerabständen vorgesehen werden, wodurch eine höhere Ballenpressleistung gefahren werden kann. Alternativ kann dem Pressraum-Beschickungsförderer auch ein Schneidwerk höherer Schneidleistung zugeordnet sein, wodurch eine besonders hohe Zerkleinerung des Ernteguts erreicht werden könnte. Bevorzugt ist jedoch die zuvor beschriebene Ausführung, durch die eine höhere Pressleistung bei futterschonender Verarbeitung erreicht werden kann.

Das Schneidwerk, das dem Laderaum-Befüllförderer zugeordnet ist, ist dabei vorteilhafterweise in einfacher Weise zugänglich. In Weiterbildung der Erfindung ist dieses Schneidwerk außerhalb des Laderaums in eine inaktive Stellung und/oder in eine Wartungsstellung aus dem Wirkungsbereich des Laderaum-Befüllförderers ausfahrbar.

Um eine möglichst geringe Spurbreite zu erreichen, ist nach einem weiteren vorteilhaften Aspekt der vorliegenden Erfindung der Ladewagen mit einem Fahrwerk versehen, dessen Reifen vollständig unterhalb des Laderaumbodens angeordnet sind. Insbesondere können die Reifen des Fahrwerks vollständig überstandsfrei unter dem Laderaum angeordnet sein und/oder innerhalb der Aufnahmebreite der Aufsammeleinrichtung angeordnet sein. Hierdurch wird auch bei nicht geschwadetem Erntegut kein auf dem Boden liegendes Erntegut überfahren, das erst beim Aufsammeln in der nächsten Fahrgasse aufgenommen wird. Hierdurch kann die Erntegutaufnahme weiter vergleichmäßigt und sich ergebende Beschickungsprobleme bei der Erntegutbeschickung der Ballenpressvorrichtung vermieden werden.

Der Ballenpressvorrichtung nachgeordnet kann in Weiterbildung der Erfindung eine Balleneinwickelvorrichtung und/oder eine Ballenausgabeeinrichtung vorgesehen sein. Vorteilhafterweise können diese am Heck des Ladewagens hinter der Ballenpressvorrichtung angeordnet sein.

Nach einer besonders vorteilhaften Ausführung der Erfindung ist dabei eine Ballenablagevorrichtung zum Ablegen der Ballen auf dem Boden vorgesehen, die aus einer abgesenkten Betriebsstellung in eine angehobene, insbesondere im wesentlichen aufrechte Transportstellung bewegt werden kann, in der die Ballenablagevorrichtung eine Rückwand des Ladewagens bildet. Insbesondere kann die Ballenablagevorrichtung einen anhebbaren und absenkbaren Ablagetisch aufweisen, der in eine aufrechte Transportstellung geschwenkt werden kann, in der er die Rückwand des Ladewagens bildet.

Die Erfindung wird nachfolgend anhand eines bevorzugten Ausführungsbeispiels und zugehöriger Zeichnungen näher erläutert. In den Zeichnungen zeigen:

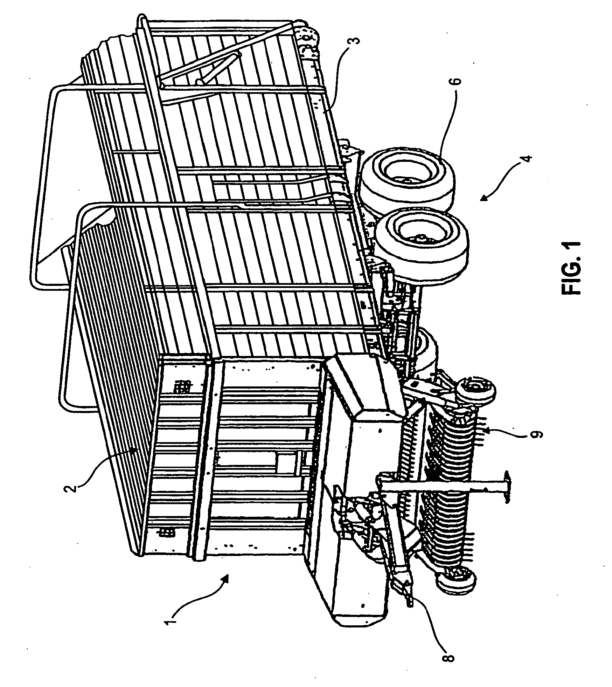

- Fig. 1:: eine schematische, perspektivische Ansicht einer kontinuierlichen Rundballenpresse mit einem bzw. in Form eines Ladewagens nach einer bevorzugten Ausführung der Erfindung,
- Fig. 2:: eine schematisierte Seitenansicht der Ballenpresse aus Fig. 1, die die in den Laderaum des Ladewagens integrierte Ballenpressvorrichtung, die dieser vorgeschaltete Dosiervorrichtung im Laderaum oberhalb des Laderaum-Bodenförderers und die der Ballenpressvorrichtung nachgeordnete Balleneinwickelvorrichtung zeigt,

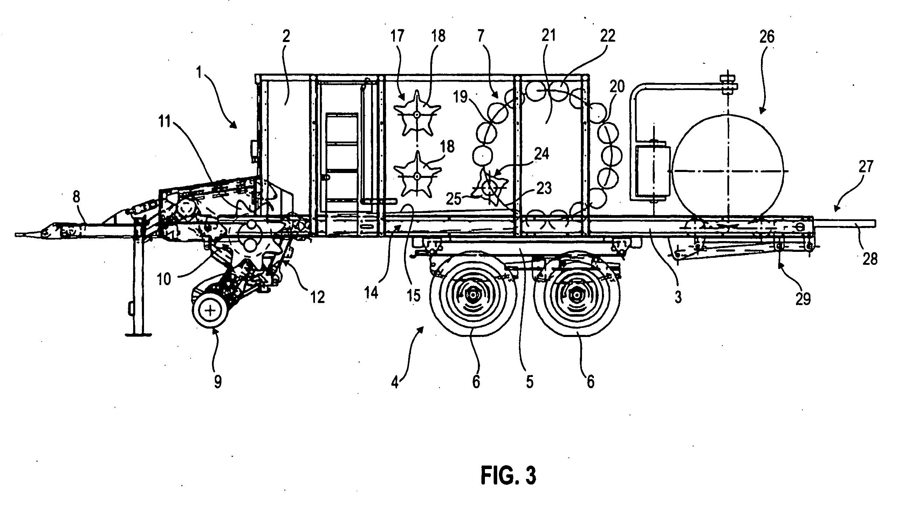

- Fig. 3:: eine schematisierte Seitenansicht der Rundballenpresse aus Fig. 1 nach einer alternativen Ausführungsform, bei der der Laderaum des Ladewagens durch eine in der Seitenwand vorgesehene Laderaumtür zugänglich ist, und
- Fig.4:: eine vereinfachte, schematisierte Darstellung der Fördereinrichtungen der Ballenpresse aus den vorhergehenden Figuren und deren Anordnung zueinander.

Die in den Figuren gezeichnete Ausführung der Erntegutverarbeitungsmaschine bildet eine Kombination aus Ladewagen und Ballenpresse, die zusammen mit einer nachgeschalteten Balleneinwickelvorrichtung in den Ladwagen integriert ist.

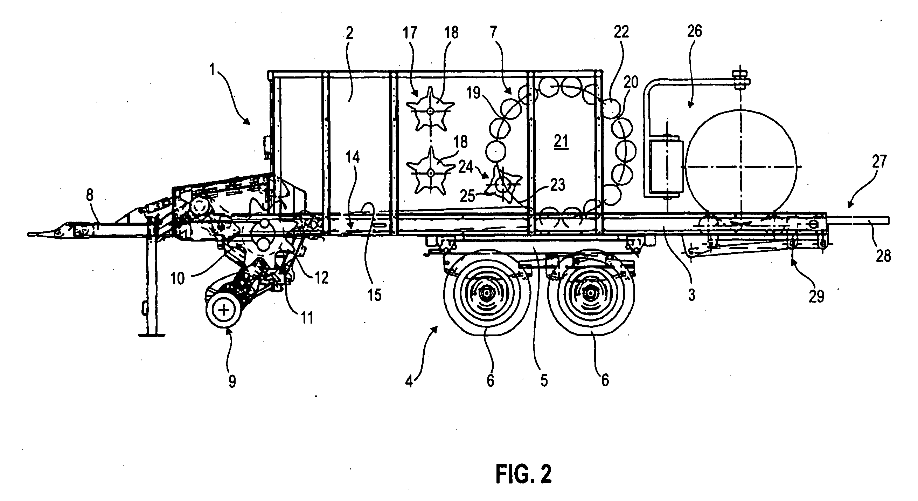

Der Ladewagen 1 umfasst einen Laderaum 2, der in der gezeichneten Ausführungsform kastenförmig ausgebildet und von aufrechten Seitenwänden und einer Vorderwand begrenzt ist. Der Laderaum 2 ruht dabei auf einem Maschinenrahmen 3, der von einem Fahrwerk 4 getragen wird. In der gezeichneten Ausführung ist dabei das Fahrwerk 4 zweiachsig ausgebildet, wobei vorteilhafterweise der Maschinenrahmen 3 und das Fahrwerk 4 separate Module bilden, so dass verschiedene Fahrwerke 4 unter dem Maschinenrahmen 3, insbesondere auch mehrachsige Fahrwerke 4 unter dem Maschinenrahmen 3 montierbar sind. Wie Figur 2 zeigt, umfasst das Fahrwerk 4 einen Fahrwerksträgerrahmen 5, der an dem Maschinenrahmen 3 lösbar befestigt sein kann, wobei vorteilhafterweise der Fahrwerksträgerrahmen 5 unter dem Maschinenrahmen 3 gesetzt ist, vgl. Figur 2.

Das Fahrwerk 4 ist dabei vorteilhafterweise derart ausgebildet, dass seine Räder 6 vollständig unterhalb des Laderaums 2 und des diesen tragenden Maschinenrahmens 3 angeordnet ist, wobei vorteilhafterweise auch kein seitlicher Überstand vorgesehen ist, so dass das Fahrwerk 4 in der von dem Laderaum 2 überdeckten Spur des Ladewagens 1 fährt. In der gezeichneten Ausführung ist dabei das Fahrwerk 4 mittig unter dem Laderaum 2, insbesondere etwa unter der noch zu beschreibenden Ballenpressvorrichtung 7 angeordnet.

Der Ladewagen 1 ist dabei über eine Deichsel 8 an einen nicht eigens gezeigten Schlepper anhängbar.

Am Bug des Ladewagens 1 bzw. des Laderaums 2 umfasst der Ladewagen 1 eine Aufsammeleinrichtung 9 in Form einer anhebbar und absenkbar ausgebildeten Pick-up mit einer rotatorisch antreibbaren Stachelwalze. Der Aufsammeleinrichtung 9 nachgeordnet ist ein Laderaum-Befüllförderer 10, der vorteilhafterweise einen rotatorisch antreibbaren Förderrotor 11 mit auskragenden Förderzinken aufweisen kann, der das von der Aufsammeleinrichtung 9 aufgenommene Erntegut übernimmt und in den Laderaum 2 fördert. Dem Laderaum-Befüllförderer 10 ist dabei vorteilhafterweise eine Schneidvorrichtung 12 vorzugsweise in Form eines Messerbalkens, der sich quer über den Ladewagen 1 erstreckt, zugeordnet, dessen Messer in den Förderkanal 13 ragen und dort mit dem Förderrotor 11 zusammenwirken. Vorzugsweise ist die Schneidvorrichtung 12 dabei aus dem Förderkanal 13 ausfahrbar ausgebildet, insbesondere unterhalb des Laderaums 2 ausschwenkbar und/oder ausfahrbar, wodurch die Schneidvorrichtung 12 gut zugänglich ist.

In dem Laderaum 2 ist an dessen Boden ein Laderaum-Bodenförderer 14 vorgesehen, der in der gezeichneten Ausführung als Kratzboden 15 ausgebildet ist, durch den ein sich durch den Laderaum-Befüllförderer 10 im Laderaum 2 aufbauender Erntegutstock nach hinten abförderbar ist, insbesondere auf die Ballenpressvorrichtung 7 zu.

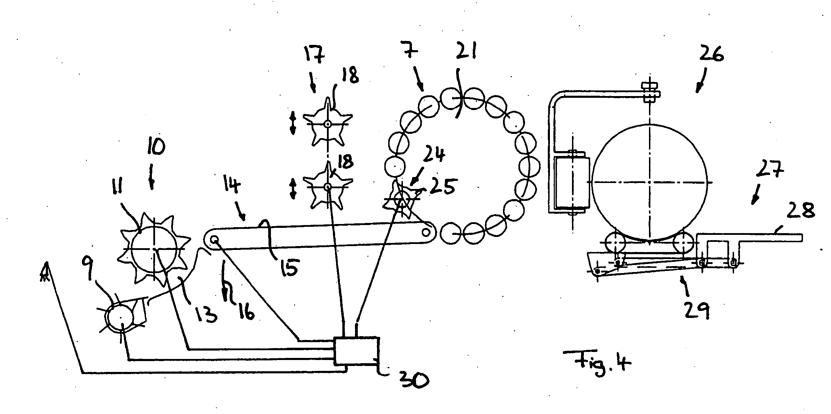

Wie in Figur 4 der Pfeil 16 verdeutlicht, ist der Boden des Laderaums 2 bzw. der Laderaum-Bodenförderer 14 an seinem vorderen Ende durch eine geeignete Hubvorrichtung beispielsweise in Form von Hydraulikzylindern absenkbar ausgebildet, derart, dass in der abgesenkten Stellung des Laderaumbodens an dessen vorderen Ende ein Auslass entsteht, durch den der Laderaum 2 entleert werden kann. Hierzu ist der nicht eigens dargestellte Kratzbodenantrieb reversierbar, so dass der Kratzboden 15 in entgegengesetzte Richtung antreibbar ist, wodurch im Laderaum 2 gespeichertes Erntegut nach vorne abgeladen werden kann. Wie Figur 4 verdeutlicht, kann der Laderaum-Bodenförderer 14 an seinem an der Ballenpressvorrichtung 7 liegenden Ende schwenkbar aufgehängt sein.

Oberhalb des Laderaum-Bodenförderers 14 ist in dem Laderaum 2 ein Dosierförderer 17 noch vor der Ballenpressvorrichtung 7 angeordnet, wobei in der gezeichneten Ausführungsform der Dosierförderer 17 ein Paar liegend angeordnete, sich quer über den Laderaum 2 erstreckende Förderwalzen 18 mit abstehenden Förderzinken aufweist. Diese Förderwalzen 18 können vorteilhafterweise an den Seitenwänden des Laderaums 2 und/oder damit verbundenen Halteeinrichtungen gelagert sein. Vorteilhafterweise sind die Förderwalzen 18 in ihrer Höhe und in ihrem Abstand voneinander veränderbar gelagert, wobei zur Einstellung der gewünschten Position und des gewünschten Abstands voneinander entsprechende Stellmittel vorgesehen sind, beispielsweise in Form von Hydraulikzylindern, wobei die Förderwalzen 18 in entsprechenden Schiebeführungen gelagert sein können.

Die Förderwalzen 18 können grundsätzlich gleichsinnig rotatorisch antreibbar sein, wobei in Weiterbildung der Erfindung auch eine gegenläufige Antriebsrichtung vorgesehen sein kann. Der nicht eigens dargestellte Förderwalzenantrieb ist dabei hinsichtlich seiner Antriebsdrehzahl veränderbar, um die Fördergeschwindigkeit und - menge des Dosierförderers 17 entsprechend verändern zu können.

Die stromab des Dosierförderers 17 angeordnete Ballenpressvorrichtung 7 umfasst ein gestellfestes Vordergehäuse 19 sowie ein relativ hierzu um eine obere Achse in eine Entladestellung für einen Rundballen aufschwenkbares Hintergehäuse 20, wobei in der gezeigten, geschlossenen Arbeitsstellung die beiden Pressengehäuseteile einen etwa kreisförmigen Zylinder definieren. Der von den beiden Gehäuseteilen 19 und 20 begrenzte Pressraum 21 wird dabei von ortsfest, jedoch drehbar gelagerten Walzen 22 umschlossen, die als Press- und Förderelemente wirken und in an sich bekannter Weise einen Erntegutballen formen.

Der Pressraum 21 umfasst an seinem vorderen, unteren Abschnitt einen schlitzförmigen Einlass 23, der im Bereich des hinteren Endes des Kratzbodens 15 angeordnet ist. Im Bereich dieses Einlasses 23 ist der Pressraum-Beschickungsförderer 24 angeordnet, der in der gezeichneten Ausführungsform durch einen liegend angeordneten, sich mit seiner Drehachse parallel zu den Achsen der Walzen 22 erstreckenden Förderrotor 25 mit abstehenden Förderzinken gebildet wird.

Hinter der Ballenpressvorrichtung 7 ist in dem Laderaum 2 weiterhin eine Balleneinwickelvorrichtung 26 angeordnet, der wiederum eine Ballenabwurf- bzw. -ablagevorrichtung 27 nachgeordnet ist. Diese Ballenablagevorrichtung 27 umfasst einen Ablagetisch 28, der durch eine Hubschwenkvorrichtung 29 einerseits zwischen einer in Figur 4 gezeigten Ballenübernahmeposition etwa auf Höhe der Balleneinwickelvorrichtung 26 zum Boden hin in eine Ablagestellung absenkbar ist. Zum anderen ist der Ablagetisch 28 vorteilhafterweise aus der liegenden Arbeitsstellung, die Figur 4 zeigt, in eine in den Figuren nicht eigens gezeigte aufrechte Transportstellung schwenkbar, in der der Ablagetisch 28 die Rückwand des Ladewagens 1 bzw. dessen Laderaum 2 bildet.

Wie Figur 4 verdeutlicht, werden die Aufsammeleinrichtung 9, der Laderaum-Befüllförderer 10, der Laderaum-Bodenförderer 14, der Dosierförderer 17 sowie der Pressraumbeschickungsförderer 24 von einer zentralen Steuereinrichtung 30 angesteuert, die die jeweiligen Fördergeschwindigkeiten der einzelnen Förderer in Abhängigkeit der eingangs beschriebenen Betriebsparameter variiert und insbesondere derart regelt, dass die Ballenpressvorrichtung in einem gewünschten Leistungsbereich arbeitet und/oder der Ladewagen mit einer maximalen Geschwindigkeit gefahren wird.

Hierdurch lässt sich ein kontinuierlicher Betrieb der Ballenpresse erreichen. Im Normalbetrieb wird dabei das von der Aufsammeleinrichtung 9 und dem Laderaum-Befüllförderer 10 in den Laderaum 2 beförderte Erntegut durch den Laderaum-Bodenförderer 14 nach hinten auf die Ballenpressvorrichtung 7 zu transportiert. Durch den Pressraumbeschickungsförderer 24 gelangt das Erntegut durch den Einlass 23 in den Pressraum 21, wo es zu einem Ballen geformt wird. Ist der Pressraum 21 voll bzw. der Ballen gepresst, wird der Laderaum-Bodenförderer 14 und/oder der Dosierförderer 17 und/oder der Pressraumbeschickungsförderer 24 angehalten, so dass der Pressraum 21 geöffnet und der Ballen an die Balleneinwickelvorrichtung 26 übergeben werden kann. Während dieser Zeitspanne fährt der Ladewagen mit vorzugsweise nahezu unverminderter Geschwindigkeit weiter. Das in den Laderaum 2 gelangende Erntegut wird vor dem Dosierförderer 17 in dem Laderaum 2 angehäuft. Ist der Ballen an die Balleneinwickelvorrichtung 26 übergeben, der Pressraum 21 wieder geschlossen und die Ballenpressvorrichtung 7 wieder aufnahmefähig, wird der Dosierförderer 17 in Betrieb gesetzt, um den aufgestauten Erntegutberg abzubauen.

## Patentansprüche

1. Kontinuierlich arbeitende Ballenpresse für landwirtschaftliches Erntegut, mit einem Laderaum (2), einer Aufsammelvorrichtung (9) zum Aufsammeln von auf dem Boden liegenden Erntegut, einem Laderaum-Befüllförderer (10) zur Beförderung des aufgesammelten Ernteguts in den Laderaum (2) sowie einen Laderaum-Bodenförderer (14) zur Beförderung des Ernteguts im Laderaum (2) weg von dem Befüllförderer (10) sowie mit einer Ballenpressvorrichtung (7), die in dem Laderaum (2) angeordnet ist und einen am Einlass (23) ihres Pressraums (21) angeordneten Pressraum-Beschickungsförderer (24) aufweist, dem durch den Laderaum-Bodenförderer (14) Erntegut zuführbar ist, **dadurch gekennzeichnet, dass** in dem Laderaum (2) oberhalb des Laderaum-bodenförderers (14) zwischen dem Laderaum-Befüllförderer (10) und dem Pressraum-Beschickungsförderer (24) ein Dosierförderer (17) zur Dosierung der dem Pressraum (21) zugeführten Erntegutmenge vorgesehen ist.

2. Ballenpresse nach dem vorhergehenden Anspruch, wobei der Dosierförderer (17) ein Paar antreibbare Förderrotoren (18) aufweist.

3. Ballenpresse nach einem der vorhergehenden Ansprüche, wobei der Dosierförderer (17) vom Laderaum-Bodenförderer (14) beabstandet angeordnet ist derart, dass ein auf dem Laderaum-Bodenförderer (14) laufender Erntegutteppich eingriffsfrei am Dosierförderer (17) vorbei zur Ballenpressvorrichtung (7) förderbar ist.

4. Ballenpresse nach einem der vorhergehenden Ansprüche, wobei der Dosierförderer (17) Einstellmittel zur variablen Einstellung seiner Fördermenge und/oder -leistung aufweist.

5. Ballenpresse nach dem vorhergehenden Anspruch in Verbindung mit Anspruch 2, wobei die Förderrotoren (18) des Dosierförderers (17) in ihrem Abstand voneinander einstellbar sind.

6. Ballenpresse nach einem der vorhergehenden Ansprüche in Verbindung mit Anspruch 2, wobei die Drehgeschwindigkeit der Förderrotoren (18) variabel einstellbar ist.

7. Ballenpresse nach einem der vorhergehenden Ansprüche, wobei die Fördermenge des Dosierförderers (17) durch eine Steuereinrichtung (30) in Abhängigkeit eines Belastungs- und/oder Füllzustands der Ballenpressvorrichtung (7) veränderbar ist.

8. Ballenpresse nach einem der vorhergehenden Ansprüche, wobei die Fördermenge des Dosierförderers (17) durch eine Steuereinrichtung (30) in Abhängigkeit eines Laderaumbefüllzustands und/oder eines Belastungszustands des Laderaum-Befüllförderers (10) veränderbar ist.

9. Ballenpresse nach einem der vorhergehenden Ansprüche, wobei die Fördergeschwindigkeit des Laderaum-Bodenförderers (14) durch eine Steuereinrichtung (30) in Abhängigkeit eines Belastungs- und/oder Füllzustands der Ballenpressvorrichtung (7) veränderbar ist.

10. Ballenpresse nach einem der vorhergehenden Ansprüche, wobei der Laderaum-Bodenförderer (17) durch eine Steuereinrichtung (30) in Abhängigkeit der Fahrgeschwindigkeit, des Belastungszustands des Laderaum-Befüllförderers (10) und/oder des Füllzustands des Laderaums (2) veränderbar ist.

11. Ballenpresse nach einem der vorhergehenden Ansprüche, wobei der Dosierförderer (17) hinsichtlich seiner Fördermenge und/oder -leistung unabhängig von der Fördergeschwindigkeit, des Laderaum-Bodenförderers (14) und der Fördergeschwindigkeit des Laderaum-Befüllförderers (10) veränderbar ist.

12. Ballenpresse nach einem der vorhergehenden Ansprüche, wobei ein Fahrgeschwindigkeits-Sollwertsignal von einer Steuereinrichtung (30) in Abhängigkeit des Belastungs-, Betriebs- und/oder Füllzustands der Ballenpressvorrichtung (7) bereitgestellt wird.

13. Ballenpresse nach dem vorhergehenden Anspruch, wobei das Fahrgeschwindigkeits-Sollwertsignal erhöht wird, bis die Ballenpressvorrichtung (7), die Aufsammeleinrichtung (9) und/oder der Laderaum-Befüllförderer (10) ihre jeweilige Leistungsgrenze erreichen.

14. Ballenpresse nach einem der vorhergehenden Ansprüche, wobei das Fahrgeschwindigkeits-Sollwertsignal von der Steuereinrichtung (30) in Abhängigkeit eines Belastungszustands der Aufsammelvorrichtung (9) und/oder des Laderaumbefüllzustands und/oder einer am Boden liegenden Erntegutmenge und/oder -volumens verändert wird.

15. Ballenpresse nach einem der vorhergehenden Ansprüche, wobei der Laderaum-Bodenförderer (14) einen Kratzboden- oder Bandförderer (15) aufweist.

16. Ballenpresse nach einem der vorhergehenden Ansprüche, wobei der Laderaumboden und/oder der Laderaum-Bodenförderer (14) an einem der Ballenpressvorrichtung (7) abgewandten Ende absenkbar ausgebildet ist und der Laderaum-Bodenförderer (14) in seiner Förderrichtung umkehrbar ausgebildet, so das bei abgesenktem Laderaumboden und/oder Laderaum-Bodenförderer (14) der Laderaum entleerbar ist.

17. Ballenpresse nach einem der vorhergehenden Ansprüche, wobei der Ballenpressvorrichtung (7) eine Balleneinwickelvorrichtung (26) und/oder eine Ballenablagevorrichtung (27) nachgeordnet ist.

18. Ballenpresse nach einem der vorhergehenden Ansprüche, wobei am Heck des Ladewagens (1) stromab der Ballenpressvorrichtung (7) ein Ballenableger (28) vorgesehen ist, der mittels einer Hubschwenkvorrichtung (29) aus einer abgesenkten Betriebsstellung in eine angehobene, insbesondere aufrechte, Transportstellung bringbar ist, in der der Ballenableger (28) eine Rückwand des Ladewagens (1) bildet.

19. Ballenpresse nach dem Oberbegriff des Anspruches 1 oder einem der vorhergehenden Ansprüche, wobei der Ladewagen (1) ein Fahrwerk (4) aufweist, dessen Räder (6) vollständig unterhalb des Laderaumbodens angeordnet sind.

20. Ballenpresse nach dem vorhergehenden Anspruch, wobei die Räder (6) des Fahrwerks (4) vollständig überstandsfrei unter dem Laderaum (2) angeordnet sind.

21. Ballenpresse nach einem der vorhergehenden Ansprüche, wobei der Ladewagen (1) einen lösbaren Fahrwerksträgerrahmen (5) zur Befestigung verschiedener Fahrwerke unter dem Laderaum (2) aufweist.

22. Ballenpresse nach einem der vorhergehenden Ansprüche, wobei dem Laderaum-Befüllförderer (10) ein Schneidwerk (12) zum Schneiden des aufgenommenen Ernteguts zugeordnet ist und die Ballenpressvorrichtung (7) schneidwerksfrei ausgebildet ist.

## Claims

1. A continuously operating baler for agricultural harvest, comprising a loading space (2), a picking-up apparatus (9) for the picking up of harvest laying on the ground, a loading space filling conveyor (10) for the conveying of the picked-up harvest into the loading space (2) and a loading space base conveyor (14) for the conveying of the harvest in the loading space (2) away from the filling conveyor (10) and comprising a baling apparatus (7) which is arranged in the loading space (2) and has a pressing space charging conveyor (24) which is arranged at the inlet (23) of the pressing space (21) of said baling apparatus and to which harvest can be supplied by the loading space base conveyor (14), **characterised in that** a metering conveyor (17) is provided in the loading space (2) above the loading space base conveyor (14) between the loading space filling conveyor (10) and the pressing space charging conveyor (24) for the metering of the harvest amount supplied to the pressing space (21).

2. A baler in accordance with the preceding claim, wherein the metering conveyor (17) has a pair of drivable conveying rotors (18).

3. A baler in accordance with one of the preceding claims, wherein the metering conveyor (17) is arranged spaced from the loading space base conveyor (14) such that a harvest carpet running on the loading space base conveyor (14) can be conveyed free of intervention past the metering conveyor (17) to the baling apparatus (7).

4. A baler in accordance with one of the preceding claims, wherein the metering conveyor (17) has setting means for the variable setting of its conveying amount and/or conveying capacity.

5. A baler in accordance with the preceding claim in conjunction with claim 2, wherein the mutual spacing of the conveying rotors (18) of the metering conveyor (17) can be set.

6. A baler in accordance with one of the preceding claims in conjunction with claim 2, wherein the rotational speed of the conveying rotors (18) can be set variably.

7. A baler in accordance with one of the preceding claims, wherein the conveying amount of the metering conveyor (17) can be changed by a control device (30) in dependence on a load level and/or filling level of the baling apparatus (7).

8. A baler in accordance with one of the preceding claims, wherein the conveying amount of the metering conveyor (17) can be changed by a control device (30) in dependence on a loading space filling level and/or on a load level of the loading space filling conveyor (10).

9. A baler in accordance with one of the preceding claims, wherein the conveying speed of the loading space base conveyor (14) can be changed by a control device (30) in dependence on a load level and/or filling level of the baling apparatus (7).

10. A baler in accordance with one of the preceding claims, wherein the loading space base conveyor (17) can be changed by a control device (30) in dependence on the travel speed, on the load state of the loading space filling conveyor (10) and/or on the filling level of the loading space (2).

11. A baler in accordance with one of the preceding claims, wherein the metering conveyor (17) can be changed with respect to its conveying amount and/or conveying capacity independently of the conveying speed of the loading space base conveyor (14) and of the conveying speed of the loading space filling conveyor (10).

12. A baler in accordance with one of the preceding claims, wherein a desired value signal for a travel speed is provided by a control device (30) in dependence on the load state, the operating state and/or the filling state of the baling apparatus (7).

13. A baler in accordance with the preceding claim, wherein the desired value signal for a travel speed is increased until the baling apparatus (7), the pick-up device (9) and/or the loading space filling conveyor (10) reach their respective capacity limits.

14. A baler in accordance with one of the preceding claims, wherein the desired value signal for the travel speed is changed by the control device (30) in dependence on a load state of the pick-up apparatus (9) and/or on the loading space filling level and/or on a harvest amount and/or harvest volume lying on the base.

15. A baler in accordance with one of the preceding claims, wherein the loading space base conveyor (14) has a chain scraping conveyor or a belt conveyor (15).

16. A baler in accordance with one of the preceding claims, wherein the loading space base and/or the loading space base conveyor (14) is made lowerable at an end remote from the baling apparatus (7) and the loading space base conveyor (14) is made reversible in its conveying direction so that the loading space can be emptied with a lowered loading space base and/or loading space base conveyor (14).

17. A baler in accordance with one of the preceding claims, wherein a bale winding apparatus (26) and/or a bale placement apparatus (27) is arranged downstream of the baling apparatus (7).

18. A baler in accordance with one of the preceding claims, wherein at the rear of the loader (1), downstream of the baling apparatus (7), a bale placer (28) is provided which can be brought by means of a lifting pivoting apparatus (29) from a lowered operating position into an elevated, in particular upright, transport position in which the bale placer (28) forms a rear wall of the loader (1).

19. A baler in accordance with the preamble of claim 1 or with one of the preceding claims, wherein the loader (1) has a chassis (4) whose wheels (6) are arranged completely below the loading space base.

20. A baler in accordance with the preceding claim, wherein the wheels (6) of the chassis (4) are arranged below the loading space (2) completely without any protrusion.

21. A baler in accordance with one of the preceding claims, wherein the loader (1) has a releasable chassis carrier frame (5) for the fastening of different chassis below the loading space (2).

22. A baler in accordance with one of the preceding claims, wherein a cutting unit (12) is associated with the loading space filling conveyor (10) for the cutting of the picked-up harvest and the baling apparatus (7) is made free of a cutting unit.

## Revendications

1. Presse à balles rondes, travaillant en continu, pour produits de récolte agricoles, comportant une chambre de chargement (2), un ramasseur (9) destiné à ramasser les produits de récolte reposant sur le sol, un convoyeur (10) pour le remplissage de la chambre de chargement, destiné à transporter dans la chambre de chargement (2) les produits de récolte ramassés, ainsi qu'un convoyeur inférieur (14) monté sur le fond de la chambre de chargement, destiné à transporter les produits de récolte à l'intérieur de la chambre de chargement (2) en les éloignant du convoyeur de remplissage (10), et comportant un dispositif de formage de la balle (7), qui est agencé dans la chambre de chargement (2) et comporte un convoyeur (24) pour le remplissage de la chambre de formage de la balle, monté au niveau de l'admission (23) de la chambre de formage de la balle (21), et vers lequel les produits de récolte peuvent être acheminés au moyen du convoyeur inférieur (14), **caractérisée en ce que** dans la chambre de chargement (2), au-dessus du convoyeur inférieur (14) entre le convoyeur (10) pour le remplissage de la chambre de chargement et le convoyeur (24) pour le remplissage de la chambre de formage de la balle, il est prévu un convoyeur de dosage (17) destiné à doser la quantité de produits de récolte acheminés vers la chambre de formage de la balle (21).

2. Presse à balles rondes selon la revendication précédente, dans laquelle le convoyeur de dosage (17) comporte une paire de rouleaux de transport (18) aptes à être actionnés.

3. Presse à balles rondes selon l'une quelconque des revendications précédentes, dans laquelle le convoyeur de dosage (17) est monté à distance du convoyeur inférieur (14), de telle sorte qu'une nappe de produits de récolte transportée sur le convoyeur inférieur (14) peut être acheminée vers le dispositif de formage de la balle (7) en passant le long du convoyeur de dosage (17) sans entrer en prise avec celui-ci.

4. Presse à balles rondes selon l'une quelconque des revendications précédentes, dans laquelle le convoyeur de dosage (17) comporte des moyens de réglage pour le réglage variable de son débit de transport et/ou de sa capacité de transport.

5. Presse à balles rondes selon la revendication précédente en association avec la revendication 2, dans laquelle les rouleaux de transport (18) du convoyeur de dosage (17) peuvent être réglés dans leur distance les uns par rapport aux autres.

6. Presse à balles rondes selon l'une quelconque des revendications précédentes en association avec la revendication 2, dans laquelle la vitesse de rotation des rouleaux de transport (18) peut être réglée de manière variable.

7. Presse à balles rondes selon l'une quelconque des revendications précédentes, dans laquelle il est possible de faire varier le débit de transport du convoyeur de dosage (17) au moyen d'un dispositif de commande (30) en fonction d'un état de charge et/ou état de remplissage du dispositif de formage de la balle (7).

8. Presse à balles rondes selon l'une quelconque des revendications précédentes, dans laquelle il est possible de faire varier le débit de transport du convoyeur de dosage (17) au moyen d'un dispositif de commande (30) en fonction d'un état de remplissage de la chambre de chargement et/ou d'un état de charge du convoyeur (10) pour le remplissage de la chambre de chargement.

9. Presse à balles rondes selon l'une quelconque des revendications précédentes, dans laquelle il est possible de faire varier la vitesse de transport du convoyeur inférieur (14) par un dispositif de commande (30) en fonction d'un état de charge et/ou d'un état de remplissage du dispositif de formage de la balle (7).

10. Presse à balles rondes selon l'une quelconque des revendications précédentes, dans laquelle il est possible de faire varier le convoyeur inférieur (17) au moyen d'un dispositif de commande (30) en fonction de la vitesse de déplacement de la presse, de l'état de charge du convoyeur (10) pour le remplissage de la chambre de chargement et/ou de l'état de remplissage de la chambre de chargement (2).

11. Presse à balles rondes selon l'une quelconque des revendications précédentes, dans laquelle le débit de transport et/ou la capacité de transport du convoyeur de dosage (17) peuvent être variés indépendamment de la vitesse de transport du convoyeur inférieur (14) et de la vitesse de transport du convoyeur (10) pour le remplissage de la chambre de chargement.

12. Presse à balles rondes selon l'une quelconque des revendications précédentes, dans laquelle un signal de valeur de consigne de la vitesse de déplacement de la presse est délivré par un dispositif de commande (30) en fonction de l'état de charge, de l'état de fonctionnement et/ou de l'état de remplissage du dispositif de formage de la balle (7).

13. Presse à balles rondes selon la revendication précédente, dans laquelle le signal de valeur de consigne de la vitesse de déplacement de la presse est augmenté jusqu'à ce que le dispositif de formage de la balle (7), le ramasseur (9) et/ou le convoyeur (10) pour le remplissage de la chambre de chargement ont atteint leur limite de capacité respective.

14. Presse à balles rondes selon l'une quelconque des revendications précédentes, dans laquelle le signal de valeur de consigne de la vitesse de déplacement de la presse est modifié par le dispositif de commande (30) en fonction d'un état de charge du ramasseur (9) et/ou de l'état de remplissage de la chambre de chargement et/ou d'une quantité et/ou volume de produits de récolte reposant sur le sol.

15. Presse à balles rondes selon l'une quelconque des revendications précédentes, dans laquelle le convoyeur inférieur (14) comporte un convoyeur à fond racleur ou un convoyeur à bandes (15).

16. Presse à balles rondes selon l'une quelconque des revendications précédentes, dans laquelle le fond de la chambre de chargement et/ou le convoyeur inférieur (14) est réalisé de manière abaissable au niveau d'une extrémité, détournée du dispositif de formage de la balle (7), et le convoyeur inférieur (14) est réalisé de manière à pouvoir inverser son sens de transport, de telle sorte que la chambre de chargement peut être vidée lorsque le fond de la chambre de chargement et/ou le convoyeur inférieur (14) sont abaissés.

17. Presse à balles rondes selon l'une quelconque des revendications précédentes, dans laquelle un dispositif d'enroulement de la balle (26) et/ou un dispositif d'éjection de la balle (27) sont montés en aval du dispositif de formage de la balle (7).

18. Presse à balles rondes selon l'une quelconque des revendications précédentes, dans laquelle à l'arrière du véhicule de chargement (1), en aval du dispositif de formage de la balle (7), il est prévu un éjecteur de balle (28) qui, au moyen d'un dispositif de pivotement vers le haut (29), peut être amené hors d'une position de service abaissée dans une position de transport relevée, en particulier verticale, dans laquelle l'éjecteur de balle (28) forme la paroi arrière du véhicule de chargement (1).

19. Presse à balles rondes selon le préambule de la revendication 1 ou l'une quelconque des revendications précédentes, dans laquelle le véhicule de chargement (1) comporte un châssis de roulement (4), dont les roues (6) sont montées totalement en dessous du fond de la chambre de chargement.

20. Presse à balles rondes selon la revendication précédente, dans laquelle les roues (6) du châssis de roulement (4) sont montées totalement en dessous de la chambre de chargement (2) sans débord.

21. Presse à balles rondes selon l'une quelconque des revendications précédentes, dans laquelle le véhicule de chargement (1) comporte un cadre support (5) amovible pour la fixation de différents châssis de roulement en dessous de la chambre de chargement (2).

22. Presse à balles rondes selon l'une quelconque des revendications précédentes, dans laquelle un mécanisme de coupe (12), destiné à couper les produits de récolte ramassés, est associé au convoyeur (10) pour le remplissage de la chambre de chargement, et le dispositif de formage de la balle (7) est réalisé sans mécanisme de coupe.
